# EUROPEAN PATENT SPECIFICATION

(11) **EP 4 167 813 B1**
(45) Date of publication and mention of the grant of the patent: **04.11.2026**
(21) Application number: 21711025.3
(22) Date of filing: 12.02.2021
(51) Int. Cl.: A47J 31/54

(54) **ELECTROMAGNETIC INDUCTION CONTINUOUS-FLOW MILK HEATER IN AN AUTOMATIC BEVERAGE VENDING MACHINE**
ELEKTROMAGNETISCHER INDUKTIONS-DURCHLAUFERHITZER FÜR MILCH IN EINEM GETRÄNKEVERKAUFSAUTOMAT
CHAUFFE-LAIT À ÉCOULEMENT CONTINU À INDUCTION ÉLECTROMAGNÉTIQUE DANS UN DISTRIBUTEUR DE BOISSON AUTOMATIQUE

(30) Priority: 19.06.2020 IT 202000014692
(43) Date of publication of application: 26.04.2023
(73) Proprietor: VEA GROUP S.P.A., 24121 Bergamo (IT)
(72) Inventor: DOGLIONI MAJER, Andrea, 24040 Chignolo d'Isola (BG) (IT)
(74) Representative: Studio Torta S.p.A.
(86) International application number: PCT/IB2021/051201
(87) International publication number: WO 2021/255530

(56) References cited:
- WO-A1-2017/191529
- WO-A1-2020/201962
- FR-A1- 2 855 359
- JP-A- 2001 284 034
- JP-A- 2003 317 915

## Description

### Cross-reference to related applications

This patent application claims priority from Italian patent application no. 102020000014692 filed on 19.06.2020.

### Technical field

This invention relates, in general, to the field of automatic beverage vending machines and, in particular, to the use of an electromagnetic induction continuous-flow heater to heat milk in an automatic beverage vending machine, both of the tabletop and of the free standing type.

### State of the Art

Machines are known, which are used to prepare and dispense beverages, in particular hot beverages, starting from an anhydrous material, for example coffee, tea, chocolate or the like.

These machines are provided with one or more water heaters, which usually are of two types: storage heaters (boilers) and heaters with a continuous flow of water.

This last-mentioned type comprises water heaters that heat water according to two main technologies: heating by means of a resistive heating element, which is largely used in the industry, and heating through electromagnetic induction, which is less common compared to the first one.

According to the first technology, an electric potential difference is applied at the ends of the heating element, which is directly or indirectly brushed by the flow of water to be heated. Hence, an electric current is generated in the heating element, which, through Joule effect, dissipates energy in the form of heat, thus heating water through conduction.

Examples of heaters of this type are described in GB 2 542 359 A, WO2004105438A1, CN 107647785 A, WO 2016/016225 A1, WO 2004/006742 A1, WO 2009/012904 A2, WO 2014/205771 A1, WO 2006/056705 A1, WO 2013/008140 A2, WO 2007/036076 A1, EP 2 881 020 A1 and DE 3542507 A1.

EP 2 044 869 A1 describes three embodiments of a continuous-flow water heater. The first two embodiments described therein entail respective continuous-flow heaters using the first technology, whereas the third embodiment uses, in a relatively simple and not very detailed manner, a heater that heats water using the aforesaid second technology.

In accordance with said second technology, the electromagnetic induction phenomenon is used to heat the water flow.

In particular, continuous-flow water heaters are known, which make use of electromagnetic induction to generate parasite currents inside a duct made of an electrically conductive material, where the water to be heated flows. Parasite currents dissipate energy through Joule effect, thus heating the duct and, as a consequence, the water flowing in contact with it.

It is known that electromagnetic induction continuous-flow water heaters are particularly advantageous for they allow water to be heated within a short amount of time.

EP 2 868 242 A1 shows a heater comprising a metal duct wound in a spiral shape and coaxially housed in a cavity of a spool made of an electrically insulating material, on which an electromagnetic induction winding is wound.

The winding is powered with an alternating electric current, which generates, through electromagnetic induction, parasite currents, which heat, through Joule effect, the spiral metal duct and, hence, the water flowing inside it.

The spool is constrained to the support structure of the machine, whereas the metal duct has not mechanical constraints to the spool, since it is simply supported by the hydraulic circuit to which its is connected by means of simple quick-coupling joints.

More precisely, the metal duct and the spool are radially separated by a free space (air gap).

Further examples of electromagnetic induction continuous-flow water heaters are disclosed in JP 2001 284034 A, WO 2017/191529 A1, JP 2003 317915 A, EP 2 881 020 A1 and GB 190915786 A.

### Subject-matter and Summary of the Invention

Even though continuous-flow water heaters of the type described above are a functionally valid solution to heat water in machines configured to prepare and dispense a beverage, the Applicant noticed that these heaters can further be improved, in particular in terms of effectiveness of the heat exchanges that can be obtained and in terms of maintenance efficiency.

Therefore, in its Italian patent application 102019000007166 and in the corresponding international patent application PCT/IB2020/052950, the Applicant disclosed an electromagnetic induction continuous-flow water heater comprising:
- a tubular body having a longitudinal axis and including at least one inlet, which is configured to receive water to be heated and to feed it, in use, into the tubular body, and an outlet, through which heated water flows out of the tubular body,
- an insert, which is housed inside the tubular body and extends along the longitudinal axis, and
- an electrical winding, which is wound around the tubular body and can be electrically powered to generate an electromagnetic induction field.

The tubular body is made of an electrically conductive material so that it is heated by electromagnetic induction due to the effect of the electromagnetic induction field generated by the electrical winding.

The tubular body and the insert are shaped so as to delimit, at least between an external surface of the insert and an internal surface of the tubular body, a helical flow channel for the water, which extends in a helix around the longitudinal axis.

Over the course of tests carried out by the Applicant in order to develop the electromagnetic induction continuous-flow water heater disclosed in its Italian patent application 102019000007166 and in the corresponding international patent application PCT/IB2020/052950, the Applicant surprisingly noticed the effectiveness of this water heater in also heating other types of fluids used in automatic beverage vending machines.

In particular, the Applicant found out that said electromagnetic induction continuous-flow water heater is very effective in heating liquid milk used for preparing beverages mainly based on liquid milk, such as for example hot milk and latte macchiato, as well as hot beverages obtained through infusion of infusion substances with hot water under pressure, such as for example coffee- or tea-based beverages, and also containing hot or cold liquid milk, emulsified or neat, for example espresso macchiato, cappuccino, etc.

In particular, the Applicant noticed that this particular effectiveness stems from the fact that said water heater manages to heat liquid milk without burning the fat contained therein, thus keeping the organoleptic properties thereof unchanged.

The Applicant further found out that said water heater can effectively heat any type of liquid milk, natural milk, artificial milk, animal milk (cow, goat, sheep, donkey, buffalo milk, etc.) plant milk, raw milk, fresh milk, pasteurized milk, whole milk, partially or totally skimmed milk, UHT milk, lactose-free milk, high-digestibility milk, etc.

Finally, the Applicant noticed that said water heater is also effective in heating other types of fluids used in automatic vending machines for the preparation of beverages, for example gases used in the preparation of beverages, in particular air used to emulsify milk or to after-heat already produced beverages in case their temperature is not high enough.

The object of the invention is to provide an electromagnetic induction continuous-flow milk heater to heat liquid milk in an automatic beverage vending machine.

According to the invention, this object is reached by the use of an electromagnetic induction continuous-flow milk heater as claimed in the appended claim.

### Brief Description of the Drawings

Figure 1 schematically shows, with parts removed for greater clarity, an automatic beverage vending machine comprising an electromagnetic induction continuous-flow milk heater used according to the invention;
Figures 2a-2c are axial sections, on a larger scale and with parts removed for greater clarity, of three configurations of the electromagnetic induction continuous-flow milk heater of Figure 1, according to a first embodiment;
Figures 3a-3d are axial sections, on a larger scale and with parts removed for greater clarity, of four configurations of the electromagnetic induction continuous-flow milk heater of Figure 1, according to a second embodiment;
Figures 4a and 4b are axial sections, on a larger scale and with parts removed for greater clarity, of two configurations of the electromagnetic induction continuous-flow milk heater of Figure 1, according to a third embodiment;
Figures 5a and 5b are axial sections, on a larger scale and with parts removed for greater clarity, of two configurations of the electromagnetic induction continuous-flow milk heater of Figure 1, according to a fourth embodiment;
Figures 6a-6d are axial sections, on a larger scale and with parts removed for greater clarity, of four configurations of the electromagnetic induction continuous-flow milk heater of Figure 1, according to a fifth embodiment;
Figures 7a-7d are axial sections, on a larger scale and with parts removed for greater clarity, of four configurations of the electromagnetic induction continuous-flow milk heater of Figure 1, according to a sixth embodiment;
Figures 8a-8d are axial sections, on a larger scale and with parts removed for greater clarity, of four configurations of the electromagnetic induction continuous-flow milk heater of Figure 1, according to a seventh embodiment.

### Detailed Description of Preferred Embodiments of the Invention

The invention will now be described in detail with reference to the accompanying figures, so as to allow a person skilled in the art to carry it out and use it. Possible changes to the embodiments described herein will be immediately evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the features described and claimed herein.

If not specifically defined otherwise, all technical and scientific terms have the meaning commonly used by people ordinarily skilled in the industry to which the invention belongs. In case of conflict, the description - including the definition provided therein - is binding. Furthermore, the examples are provided by mere way of explanation and, as such, should not be considered as limiting.

In order to make it easier to understand the embodiments described herein, reference is made to some specific embodiments and a specific language will be used to describe them. The terms used in this document are aimed at exclusively describing particular examples and are not suited to limit the scope of protection of the invention.

Furthermore, the invention will be described hereinafter with reference to the heating of liquid milk, without because of this losing in generality, since the invention, as already mentioned above, can be used to also heat other types of fluids used in automatic beverage vending machine, in particular air used to emulsify liquid milk or other fluids besides water.

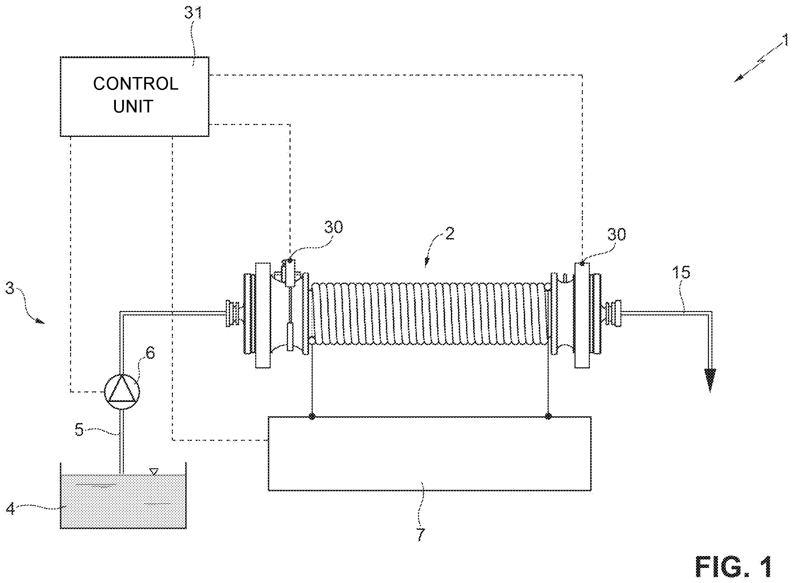

With reference to Figure 1, number 1 schematically indicates, as a whole, an automatic machine to prepare and dispense beverages, in particular hot beverages, starting from an anhydrous material, for example coffee, tea, chocolate or the like.

The machine 1 comprises:
- an electromagnetic induction continuous-flow milk heater 2;
- a milk circuit 3 (schematically shown) comprising a milk container 4 and a milk pump 6 in fluid communication with the milk container 4, which can be operated so as to convey a milk flow from the milk container 4 towards an inlet of the milk heater 2 through a milk feeding pipe 5; and
- an electric circuit 7 (schematically shown) to supply power to the milk heater 2, as described more in detail below.

The milk container 4 can be of any type, in particular of a reusable type, for example of the bottle or drum type, or of the disposable type, for example of the so-called bag-in-box type, and is housed inside a refrigerated store (not shown) present on the inside or on the outside of the machine 1, so as to keep the milk at an ideal preservation temperature, for example 5°C.

The milk container 4 can contain liquid milk of any type, natural milk, artificial milk, animal milk (cow, goat, sheep, donkey, buffalo milk, etc.) plant milk, raw milk, fresh milk, pasteurized milk, whole milk, partially or totally skimmed milk, UHT milk, lactose-free milk, high-digestibility milk, etc.

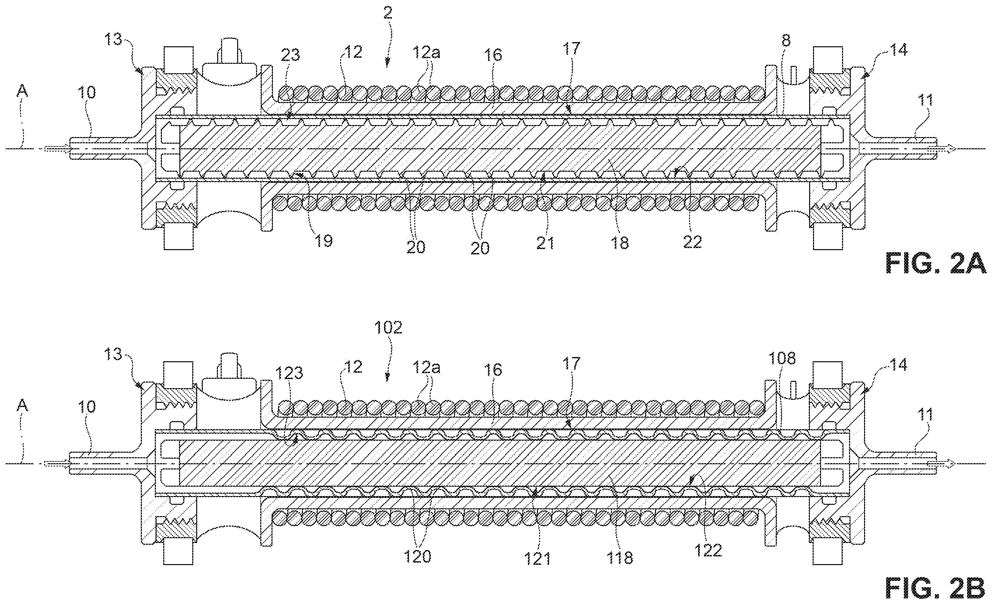

According to figure 2a, the heater 2 basically comprises a tubular body 8 having a longitudinal axis A and including at least one inlet 10, in particular an inlet passage, which is configured to receive a flow of milk to be heated from the milk container 4 and to feed it, in use, into the tubular body 8, and an outlet 11, in particular an outlet passage, through which the heated milk flow flows out of the tubular body 8.

According to this preferred and non-limiting embodiment, the tubular body 8 has a substantially cylindrical, hollow shape and the axis A is straight. Furthermore, the tubular body 8 is constrained to an internal support structure (not shown) of the machine 1, in a way that is known and, therefore, not described in detail.

To this aim, the heater 2 comprises a first end portion 13 and a second end portion 14, which are arranged on axially opposite sides of the tubular body 8, are fixed to the tubular body 8 and are suited to be coupled to the internal support structure of the machine 1.

In particular, the first end portion 13 and the second end portion 14 define respective axial closing elements, which define the inlet 10 and the outlet 11, respectively, and are coupled to the tubular body 8 in a removable manner, for example by means of threading, so that they can be removed and allow the inside of the tubular body 8 to be cleaned by means of a suitable brush.

More in particular, the inlet 10 and the outlet 11 are defined by respective hollow protuberances, which axially project from the first end portion 13 and from the second end portion 14, respectively.

In the example shown herein, the outlet 11 is fluidically connected to a milk dispensing pipe 15 (Figure 1), which is arranged so as to convey the heated milk flowing out of the milk heater 2 towards a milk dispensing nozzle, which is arranged in a beverage dispensing station. The heater 2 further comprises an electrical winding 12, which is arranged, namely wound around the tubular body 8, coaxially to the axis A, and can be electrically powered to generate an electromagnetic induction field.

In detail, the winding 12 is defined by a plurality of concentric successive turns 12a wound on the external surface of a hollow and substantially cylindrical spool 16, which is mounted coaxially to the tubular body 8. In other words, the tubular body 8 is at least partially housed in the axial cavity of the spool 16.

More in detail, the spool 16 is made of an electrically non-conductive material, namely a material with zero magnetic susceptibility.

The winding 12 is configured to be powered with an alternating electric current at a given frequency of oscillation and to generate, in this way, the aforesaid electromagnetic induction field.

Conveniently, the tubular body 8 is made of an electrically and magnetically conductive material and, therefore, is configured to be heated through electromagnetic induction due to the electromagnetic induction field.

Conveniently, between the spool 16 and the external surface of the tubular body 8 there is radially interposed a layer 17 of thermally insulating material so as prevent, in use, heat from being transmitted from the tubular body 8 to the spool 16 by conduction.

In an embodiment, the spool 16 could be co-moulded (over-moulded) on the tubular body 8.

In another embodiment, the winding 12 is directly wound on the tubular body 8 with the sole interposition of the insulating material layer 17.

In another embodiment, the winding 12 is directly wound on the tubular body 8.

According to Figure 1, the machine 1 further comprises a number of temperature sensors 30, in the example described herein two temperature sensors 30, each arranged in the area of the inlet 10 and of the outlet 11 respectively and configured to detect the milk temperature in the respective area of action.

The machine 1 further comprises a control unit 31, which is configured to receive the temperature values detected by the temperature sensors 30 and to control the activation of the electric circuit 7 accordingly.

According to Figure 2a, the heater 2 further comprises an insert 18, which does not generate heat, is made of an electrically non-conductive material with zero magnetic susceptibility, is housed inside the tubular body 8, in particular coaxially to the axis A, and extends along the axis A.

In particular, the insert 18 is housed inside the tubular body 8 so that it can be extracted from the tubular body 8 following the removal of one of the end portions 13, 14, so as to allow the inside of the tubular body 8 and the insert 18 itself to be cleaned. According to this preferred non-limiting embodiment, the insert 18 comprises a threading 19 defining a helical crest 20 extending on an external surface 21 of the insert 18 around the longitudinal axis A.

In detail, the helical crest 20 is arranged in contact with an internal surface 22 of the tubular body 8.

In this way, the tubular body 8 and the insert 18, more specifically the external surface 21 and the internal surface 22, delimit between one another a helical flow channel 23 for the milk, which extends in a helix around the axis A.

Preferably, the helical crest 20 develops according to a cylindrical helix with a constant pitch.

In an alternative embodiment which is not shown herein, the helical crest 20 develops according to a cylindrical helix with a variable pitch or a conical helix with a constant or variable pitch.

In light of the above, the flow channel 23 defines a helical or spiral passage to heat the milk flowing through the heater 2. Thanks to this configuration, the milk follows a path inside the tubular body 8 having a length that it greater than the one of the path followed in case the milk flow axially flows in a linear manner inside the tubular body 8. This allows the milk temperature to be controlled in a precise fashion.

This solution proves to be particularly suited for the production of beverages requiring small milk quantities and, hence, flow rates or beverages requiring a high precision in the milk temperature, for example when the taste of the beverages is significantly affected by the milk temperature, or, in addition, beverages prepared using different types of milk (animal milk, plant milk, raw milk, fresh milk, pasteurized milk, whole milk, partially or totally skimmed milk, UHT milk, lactose-free milk, high-digestibility milk. Etc.), which require different heating temperatures in order to preserve the organoleptic properties thereof.

The operation of the heater 2 will be described below, with particular reference to an initial condition, in which the milk flow is fed to the tubular body 8 through the inlet 10.

In this condition, the milk flow is deflected by the threading 19 of the insert 18 and flows through the helical flow channel 23 delimited by the helical crest 20 and by the internal surface 22 of the tubular body 8.

At the same time, the winding 12 is powered by means of the control unit 31, which controls the activation of the electric circuit 7. The tubular body 8 is heated through electromagnetic induction and the milk flowing through the flow channel 23 is heated, as a consequence, through conduction, since it brushes the internal surface 22 of the tubular body 8.

At this point, the milk flows out through the outlet 11. The process is repeated for each beverage to be prepared.

In figure 2b, number 102 indicates, as a whole, an electromagnetic induction milk heater according to an alternative embodiment of the invention.

Since the heater 102 is similar to the heater 2, the following description is limited to the differences between them, using, when possible, the same references for identical or corresponding parts.

In particular the heater 102 differs from the heater 2 in that it comprises an insert 118 with a substantially cylindrical shape having an external surface 121, which is substantially smooth, without any threading, and is parallel to the axis A.

Furthermore, the heater 102 includes the tubular body 108 provided with a helical crest 120 extending on the internal surface 122 of the tubular body 108 around the axis A and arranged in contact with the external surface 121 of the insert 118.

In this way, a helical flow channel 123 is defined, which is delimited by the external surface 121 and by the helical crest 120.

The operation of the heater 102 is similar to the one of the heater 2.

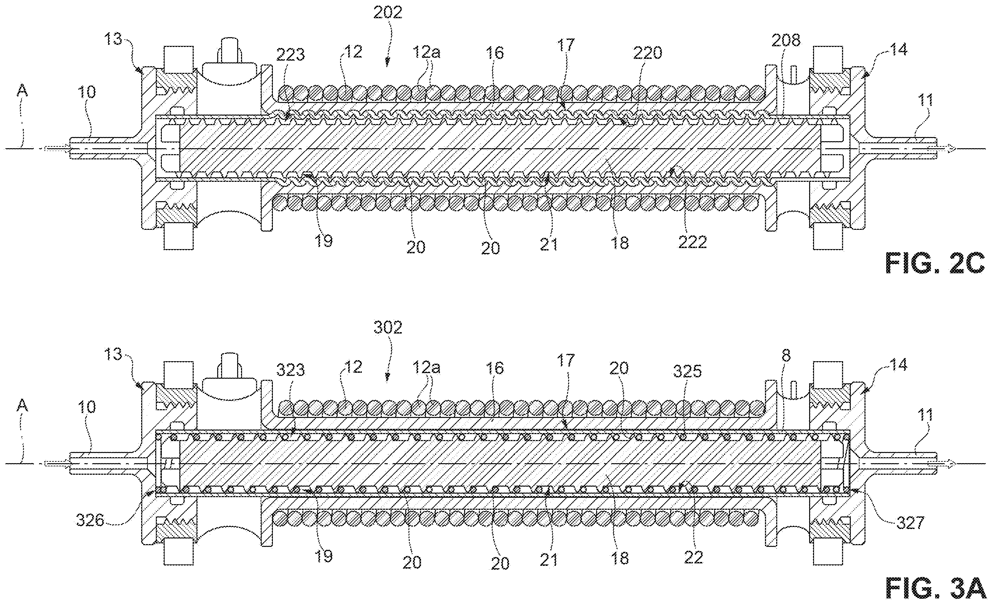

In figure 2c, number 202 indicates, as a whole, an electromagnetic induction milk heater according to a further embodiment of the invention.

Since the heater 202 is similar to the heater 2 and to the heater 102, the following description is limited to the differences between them, using, when possible, the same references for identical or corresponding parts.

In particular, the heater 202 comprises the insert 18 and a tubular body 208, which is substantially similar to the tubular body 108 of the heater 102.

In this way, a helical flow channel 223 is defined, which is delimited by the helical crest 20 of the insert 18, a helical crest 220 of the tubular body 208, the internal surface 222 of the tubular body 208 and the external surface 21 of the insert 18.

The operation of the heater 202 is similar to the one of the heater 2.

In figure 3a number 302 indicates, as a whole, an electromagnetic induction milk heater according to a further embodiment of the invention.

Since the heater 302 is similar to the heater 2, the following description is limited to the differences between them, using, when possible, the same references for identical or corresponding parts.

In particular, the heater 302 differs from the heater 2 in that it comprises a milk flow diverter member 325, which is carried by the insert 18 and has a helical shape around the axis A.

Preferably, the diverter member 325 is defined by a cylindrical helical spring, which is coupled to the insert 18 in such a way that each turn is housed in a corresponding passage section of the flow channel 323.

Preferably, the diverter member 325 is defined by a cylindrical helical spring with a constant pitch.

In an alternative embodiment, the diverter member 325 is defined by a cylindrical helical spring with a variable pitch or by a conical helical spring with a constant or variable pitch.

In light of the above, the passage section of the flow channel 323 is narrower than the passage section of the flow channel 23 of the heater 2.

Thanks to this configuration, the passage section of the flow channel 323 can be changed by simply replacing the diverter member 325 - for example, choosing diverter members 325 whose turns have different diameters - without necessarily having to change or replace the insert 18 or the tubular body 8.

Furthermore, the diverter member 325 is arranged in contact with the internal surface 22 of the tubular body 8 so as to allow users to remove, by means of scraping, possible milk deposited on the internal surface 22 during the normal use of the machine 1.

To this regard, the diverter member 325 is elastically deformable along the axis A and has, in non-deformed conditions, an axial length that is greater than the axial length of the insert 18.

In this way, when the heater 302 is being assembled (mounted), the diverter member 325 is elastically compressed and, for it is arranged in contact with the internal surface 22, by elastically deforming it scrapes off possible milk deposited on the internal surface 22.

More in detail, during the assembly, the insert 18, which carries the diverter member 325, is fitted through interference into the tubular body 8, so that the helical crest 20 and the diverter member 325 are arranged in contact with the internal surface 22 and until an axial end 326 of the diverter member strikes against the first end portion 13.

At this point, the second end portion 14 is coupled to the tubular body 8 so as to press and compress the diverter member 325 in the area of a second axial end 327 thereof, which is opposite the first axial end 326.

The compression causes an axial movement of the turns of the diverter member 325, which scrape the internal surface 22, thus obtaining the desired effect.

The operation of the heater 302 is similar to the one of the heater 2.

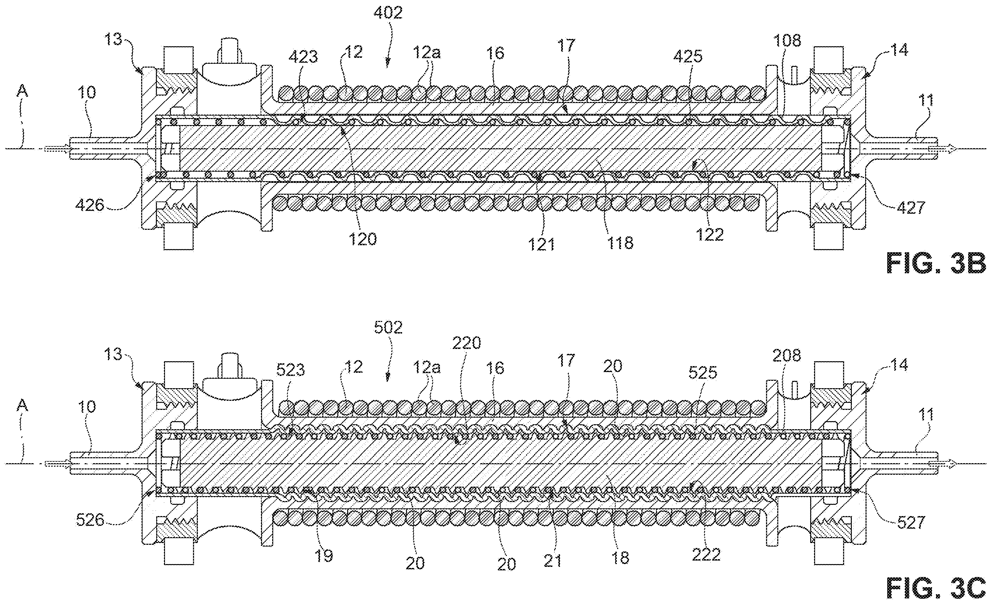

In figure 3b, number 402 indicates, as a whole, an electromagnetic induction milk heater according to an alternative embodiment of the invention.

Since the heater 402 is similar to the heater 102, the following description is limited to the differences between them, using, when possible, the same references for identical or corresponding parts.

In particular, the heater 402 differs from the heater 102 in that it comprises a diverter member 425, which is substantially the same as the diverter member 325.

In this way, a helical flow channel 423 is defined, which is delimited by the external surface 121, by the helical crest 120 and by the diverter member 425.

As a consequence, the passage section of the flow channel 423 is narrower and the passage section of the flow channel 423 can be changed by simply replacing the diverter member 425 - for example, choosing diverter members 425 whose turns have different diameters - without necessarily having to change or replace the insert 118 or the tubular body 108.

The operation of the heater 402 is similar to the one of the heater 102.

In figure 3c, number 502 indicates, as a whole, an electromagnetic induction milk heater according to an alternative embodiment of the invention.

Since the heater 502 is similar to the heater 202, the following description is limited to the differences between them, using, when possible, the same references for identical or corresponding parts.

In particular, the heater 502 differs from the heater 202 in that it comprises a diverter member 525, which is substantially the same as the diverter member 325.

In particular, the heater 502 comprises both the insert 18 and the tubular body 208.

In this way, a helical flow channel 523 is defined, which is delimited by the helical crest 20 of the insert 18, the helical crest 220 of the tubular body 208, the internal surface 222 of the tubular body 208, the external surface 21 of the insert 18 and the diverter member 525.

As a consequence, the passage section of the flow channel 523 is narrower and the passage section of the flow channel 523 can be changed by simply replacing the diverter member 525 - for example, choosing diverter members 525 whose turns have different diameters - without necessarily having to change or replace the insert 18 or the tubular body 208.

The operation of the heater 502 is similar to the one of the heater 202.

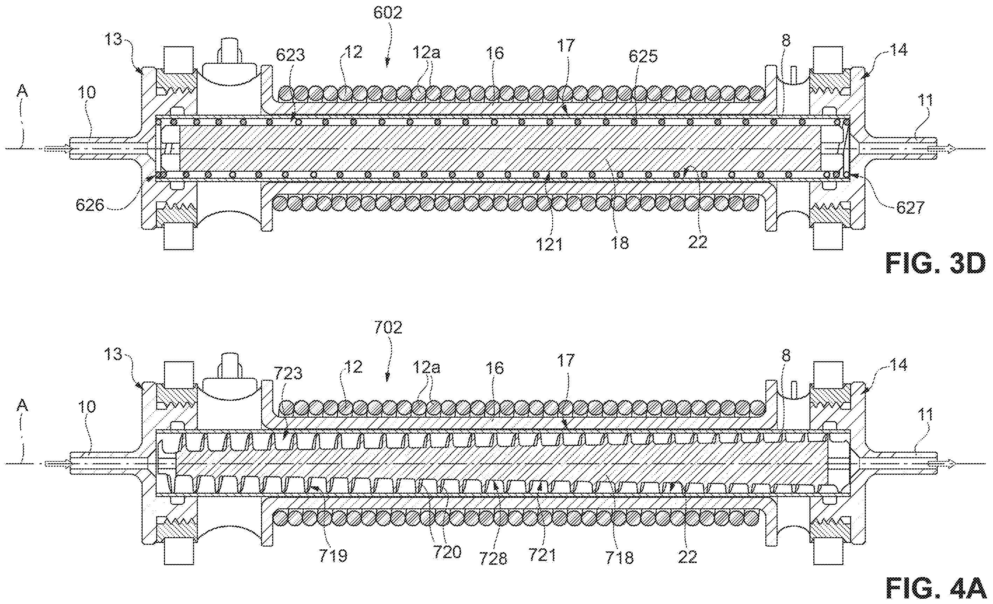

In figure 3d, number 602 indicates, as a whole, an electromagnetic induction milk heater according to an alternative embodiment of the invention.

Since the heater 602 is similar to the heater 302, the following description is limited to the differences between them, using, when possible, the same references for identical or corresponding parts.

In particular, the heater 602 differs from the heater 302 in that it comprises an insert 118, hence with a substantially cylindrical shape and having an external surface 121, which is substantially smooth and parallel to the axis A. Therefore, the internal surface 22 of the tubular body 8 and the external surface 121 of the insert 118 are cylindrical and parallel to one another as well as parallel to the axis A.

The heater 602 comprises a diverter member 625, which is wound in a helical shape around the insert 118 and is arranged in contact with the internal surface 22 of the tubular body 8 and with the external surface 121 of the insert 118.

As a consequence, in this case the flow channel 623 is delimited by the internal surface 22 of the tubular body 8, by the external surface 121 of the insert 118 and by part of the external surface of the diverter member 625.

The operation of the heater 602 is similar to the one of the heater 2.

In figure 4a number 702 indicates, as a whole, an electromagnetic induction milk heater according to a further embodiment of the invention.

Since the heater 702 is similar to the heater 2, the following description is limited to the differences between them, using, when possible, the same references for identical or corresponding parts.

In particular, the heater 702 differs from the heater 2 in that it defines a helical flow channel 723 having a passage section that is variable along the axis A.

To this aim, the heater 702 comprises an insert 718 including a threading 719 having:
- a helical crest 720 extending on an external surface 721 of the insert 718 around the axis A; and
- a helical root 728 extending on the outer surface 721 around the axis A, following the helical crest 720.

In detail, whereas the maximum diameter of the helical crest 720 is constant, since the helical crest 720 is arranged in contact with the internal surface 22 of the tubular body 8, the diameter of the helical root 728, relative to the axis A, is variable along the axis A itself.

More in detail, said diameter increases in a direction that runs from the inlet 10 to the outlet 11.

According to an alternative embodiment which is not shown herein, the diameter of the helical root 728 decreases in the aforesaid direction.

Thanks to this configuration, greater flow rates can be obtained compared to the case in which the heater 2 is used.

The operation of the heater 702 is similar to the one of the heater 2.

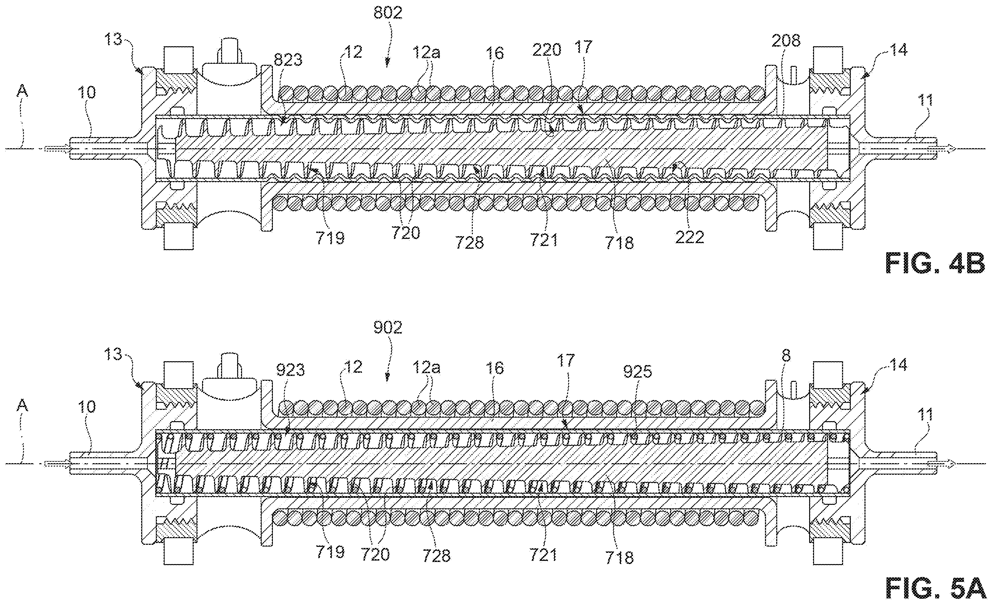

In figure 4b number 802 indicates, as a whole, an electromagnetic induction milk heater according to a further embodiment of the invention.

Since the heater 802 is similar to the heater 702, the following description is limited to the differences between them, using, when possible, the same references for identical or corresponding parts.

In particular, the heater 802 differs from the heater 702 in that it further comprises a tubular body 208.

In this way, a helical flow channel 823 is defined, which is delimited by the helical crest 720 of the insert 718, the helical crest 220 of the tubular body 208, the internal surface 222 of the tubular body 208 and the external surface 721 of the insert 718.

The operation of the heater 802 is similar to the one of the heater 702.

In figure 5a number 902 indicates, as a whole, an electromagnetic induction milk heater according to a further embodiment of the invention.

Since the heater 902 is similar to the heater 702, the following description is limited to the differences between them, using, when possible, the same references for identical or corresponding parts.

In particular, the heater 902 differs from the heater 702 in that it further comprises a diverter member 925, which is substantially the same as the diverter member 325 of the heater 302 and has the same features and functions.

Thanks to this configuration, the passage section of the flow channel 923 can be changed by simply replacing the diverter member 925.

The operation of the heater 902 is similar to the one of the heater 702.

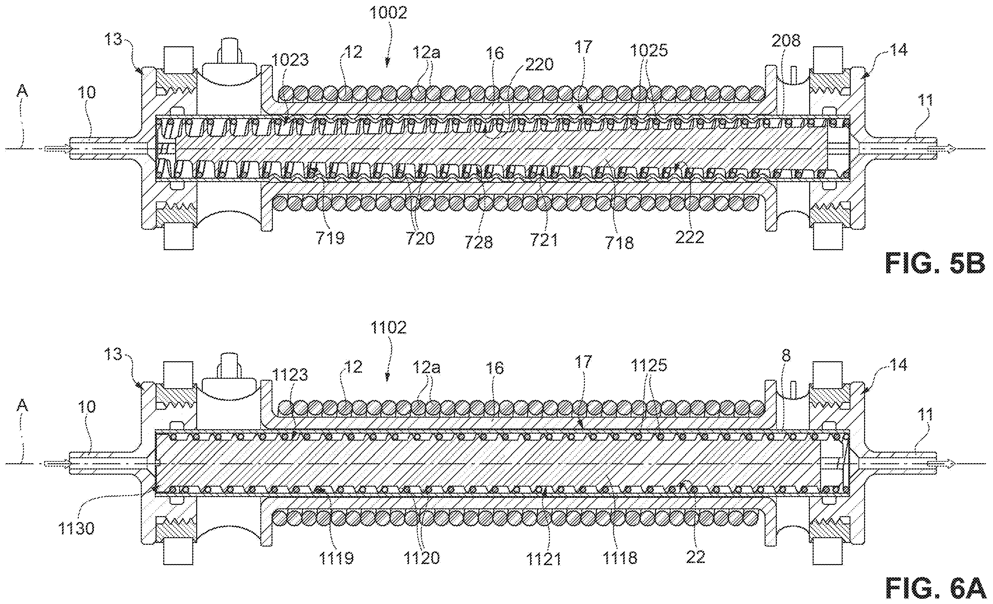

In figure 5b number 1002 indicates, as a whole, an electromagnetic induction milk heater according to a further embodiment of the invention.

Since the heater 1002 is similar to the heater 802, the following description is limited to the differences between them, using, when possible, the same references for identical or corresponding parts.

In particular, the heater 1002 differs from the heater 802 in that it further comprises a diverter member 1025, which is substantially the same as the diverter member 925 of the heater 902 and has the same features and functions.

The operation of the heater 1002 is similar to the one of the heater 902.

In figure 6a number 1102 indicates, as a whole, an electromagnetic induction milk heater according to a further embodiment of the invention.

Since the heater 1102 is similar to the heater 302, the following description is limited to the differences between them, using, when possible, the same references for identical or corresponding parts.

In particular, the heater 1102 differs from the heater 302 in that it comprises an insert 1118, which is substantially similar to the insert 18 and is movable inside the tubular body 8 at least between:
- a first position, in which the insert 1118 is arranged closer to the inlet 10; and
- a second position, in which the insert 1118 is arranged closer to the outlet 11.

In detail, the insert 1118 comprises a closing portion, in this specific example a shutter 1130 configured to seal the inlet 10 in a fluid-tight manner.

More in detail, the shutter 1130 is configured to seal the inlet 10 in a fluid-tight manner when the insert 1118 is arranged in the first position.

According to this preferred embodiment, the insert 1118 is movable between the first and the second position by means of the pressure of the fluid acting upon the insert 1118 itself in the area of the inlet 10, in particular acting upon the shutter 1130.

More precisely, the pressure of the milk flow fed to the tubular body 8 through the inlet 10 pushes, in use, the shutter 1130 and, hence, the insert 1118 towards the second position, thus opening the passage for the milk and allowing the latter to flow into the flow channel 1123.

A diverter member 1125, which is substantially similar to the diverter member 325, also properly serves as striker member for the shutter 1130, holding the insert 1118 in the first position, under rest conditions (when the milk does not press against the shutter 1130).

Conveniently, during the movement of the insert 1118 from the first to the second position and vice versa, the diverter member 1125 scrapes the internal surface 22 of the tubular body 8.

In this way, an automatic maintenance - removal of milk deposits - can be carried out and, furthermore, the channel 1123 can automatically be closed in a fluid-tight manner.

The operation of the heater 1102 is similar to the one of the heater 302.

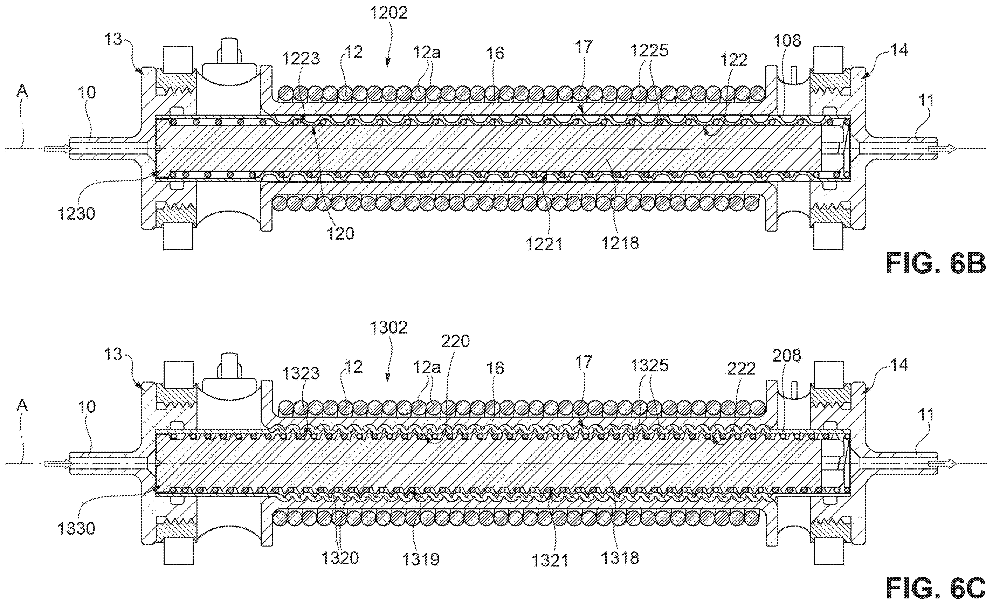

In figure 6b number 1202 indicates, as a whole, an electromagnetic induction milk heater according to a further embodiment of the invention.

Since the heater 1202 is similar to the heater 402, the following description is limited to the differences between them, using, when possible, the same references for identical or corresponding parts.

In particular, the heater 1202 differs from the heater 402 in that it comprises a shutter 1230, which is structurally and functionally similar to the shutter 1130. The insert 1218 is substantially similar to the insert 118 (namely, it is smooth and cylindrical) except for the shutter 1230.

The presence of a diverter member 1225, which is similar to the diverter member 425, defines a flow channel 1223, which is substantially similar to the flow channel 423.

The operation of the heater 1202 is similar to the one of the heater 1102.

In figure 6c number 1302 indicates, as a whole, an electromagnetic induction milk heater according to a further embodiment of the invention.

Since the heater 1202 is similar to the heater 502, the following description is limited to the differences between them, using, when possible, the same references for identical or corresponding parts.

In particular, the heater 1302 differs from the heater 502 in that it comprises a shutter 1330, which is structurally and functionally similar to the shutter 1130. The insert 1318 is substantially similar to the insert 18, except for the shutter 1330.

The presence of a diverter member 1325, which is substantially similar to the diverter member 525, defines a flow channel 1323, which is substantially similar to the flow channel 523.

The operation of the heater 1302 is similar to the one of the heater 1102.

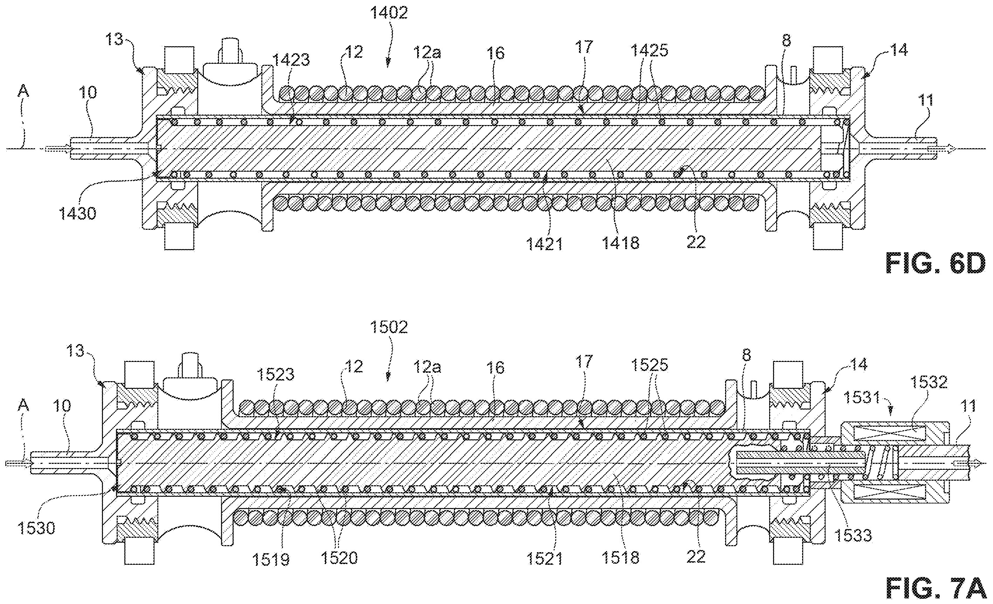

In figure 6d number 1402 indicates, as a whole, an electromagnetic induction milk heater according to a further embodiment of the invention.

Since the heater 1402 is similar to the heater 602, the following description is limited to the differences between them, using, when possible, the same references for identical or corresponding parts.

In particular, the heater 1402 differs from the heater 602 in that it comprises a shutter 1430, which is structurally and functionally similar to the shutter 1130. The insert 1418 is substantially similar to the insert 18, except for the shutter 1430.

The presence of a diverter member 1425, which is substantially similar to the diverter member 625, defines a flow channel 1423, which is substantially similar to the flow channel 623.

The operation of the heater 1402 is similar to the one of the heater 1102.

In figure 7a number 1502 indicates, as a whole, an electromagnetic induction milk heater according to a further embodiment of the invention.

Since the heater 1502 is similar to the heater 1102, the following description is limited to the differences between them, using, when possible, the same references for identical or corresponding parts.

In particular, the heater 1502 differs from the heater 1102 in that it comprises an insert 1518, which is structurally and functionally similar to the insert 1118 and, hence, comprises a shutter 1530, which is substantially similar to the shutter 1130, and a diverter member 1525, which is substantially similar to the diverter member 1125 and is movable inside the tubular body 8 by means of a magnetic actuator 1531, which is configured to control the movement of the insert 1518 between the first and the second position by means of a magnetic interaction.

More in detail, the magnetic actuator 1531 comprises a fixed solenoid 1532, which can selectively be supplied with power in order to generate an electromagnetic field, and a permanent magnet 1533, which is fixed to the insert 1518 in an integral manner and is configured to be magnetically coupled to the solenoid 1532.

More precisely, by electrically supplying the solenoid 1532, a movement of the permanent magnet 1533 and, hence, of the insert 1518 is obtained in a known manner.

Thanks to this configuration it is possible to control the movement of the insert 1518 and, hence, everything stemming from it - for example the removal of milk deposits by means of the diverter member 1525 - regardless of the pressure of the milk exerted upon the insert 1518.

Preferably, the magnetic actuator 1531 is arranged in the area of the outlet 11.

The operation of the heater 1502 is similar to the one of the heater 1102.

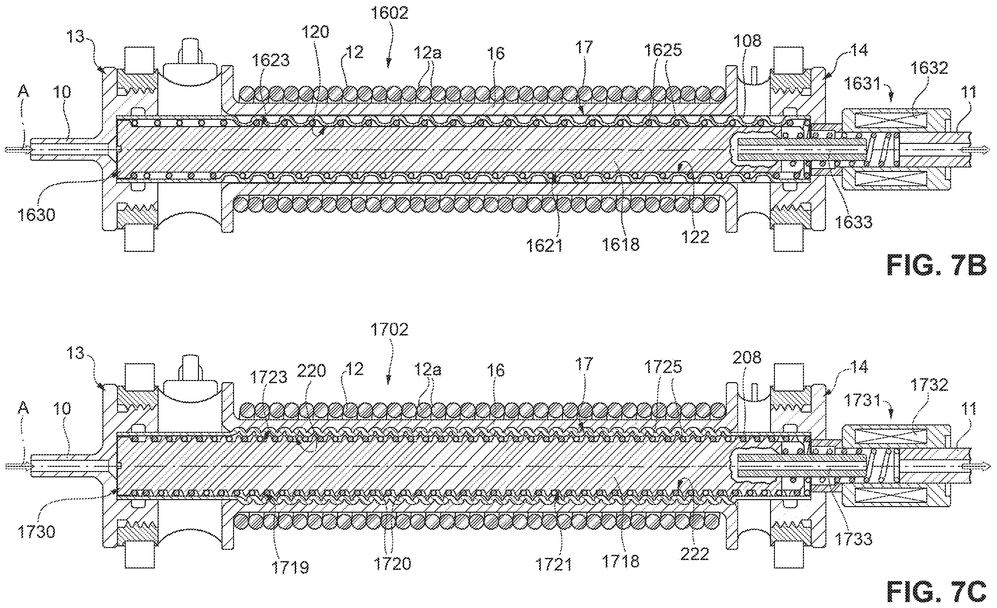

In figure 7b number 1602 indicates, as a whole, an electromagnetic induction milk heater according to a further embodiment of the invention.

Since the heater 1602 is similar to the heater 1202, the following description is limited to the differences between them, using, when possible, the same references for identical or corresponding parts.

In particular, the heater 1602 differs from the heater 1202 in that it comprises an insert 1618, which, hence, comprises a shutter 1630 substantially similar to the shutter 1230 and a diverter member 1625 substantially similar to the diverter member 1225 and is structurally and functionally similar to the insert 1218, but is movable inside the tubular body 108 by means of a magnetic actuator 1631, which is substantially identical, in terms of structure and function, to the magnetic actuator 1531.

The operation of the heater 1602 is similar to the one of the heater 1502.

In figure 7c number 1702 indicates, as a whole, an electromagnetic induction milk heater according to a further embodiment of the invention.

Since the heater 1702 is similar to the heater 1302, the following description is limited to the differences between them, using, when possible, the same references for identical or corresponding parts.

In particular, the heater 1702 differs from the heater 1302 in that it comprises an insert 1718, which is structurally and functionally similar to the insert 1318 and, hence, comprises a shutter 1730 substantially similar to the shutter 1330 and a diverter member 1725 substantially similar to the diverter member 1325, but is movable inside the tubular body 208 by means of a magnetic actuator 1731, which is substantially identical, in terms of structure and function, to the magnetic actuator 1531.

The operation of the heater 1702 is similar to the one of the heater 1502.

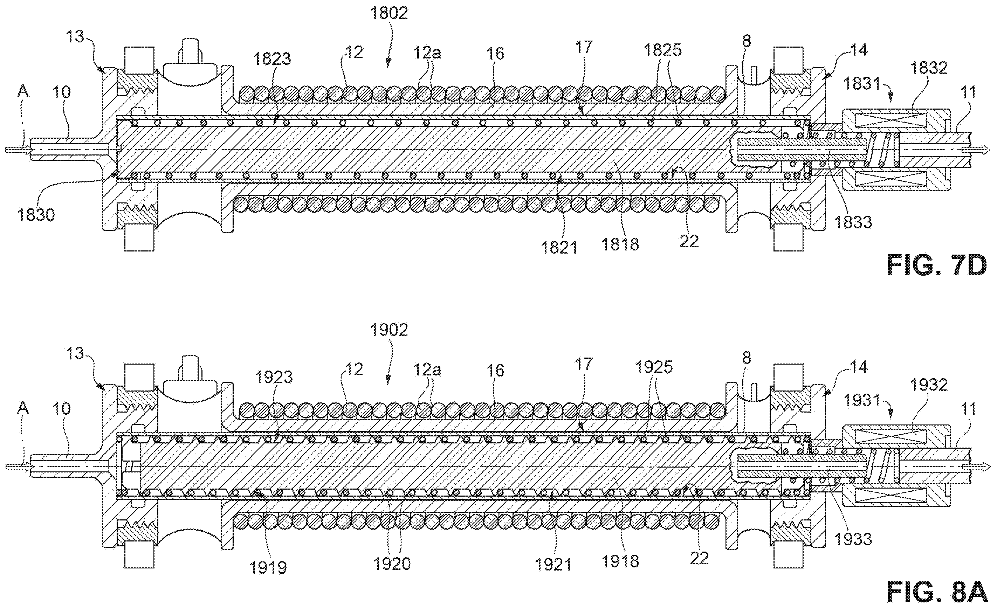

In figure 7d number 1802 indicates, as a whole, an electromagnetic induction milk heater according to a further embodiment of the invention.

Since the heater 1802 is similar to the heater 1402, the following description is limited to the differences between them, using, when possible, the same references for identical or corresponding parts.

In particular, the heater 1802 differs from the heater 1402 in that it comprises an insert 1818, which is structurally and functionally similar to the insert 1418 and, hence, comprises a shutter 1830 substantially similar to the shutter 1430 and a diverter member 1825 substantially similar to the diverter member 1425, but is movable inside the tubular body 8 by means of a magnetic actuator 1831, which is substantially identical, in terms of structure and function, to the magnetic actuator 1531.

The operation of the heater 1802 is similar to the one of the heater 1502.

In figure 8a number 1902 indicates, as a whole, an electromagnetic induction milk heater according to a further embodiment of the invention.

Since the heater 1902 is similar to the heater 302, the following description is limited to the differences between them, using, when possible, the same references for identical or corresponding parts.

In particular, the heater 1902 differs from the heater 302 in that it comprises an insert 1918, which is structurally and functionally similar to the insert 18, but is movable inside the tubular body 8 by means of a magnetic actuator 1931, which is substantially identical, in terms of structure and function, to the magnetic actuator 1531.

Thanks to this configuration, the insert 1918 is movable inside the tubular body 8, without any substantial help from the pressure of the fluid exerted upon the insert 1918.

The operation of the heater 1902 is similar to the one of the heater 1502.

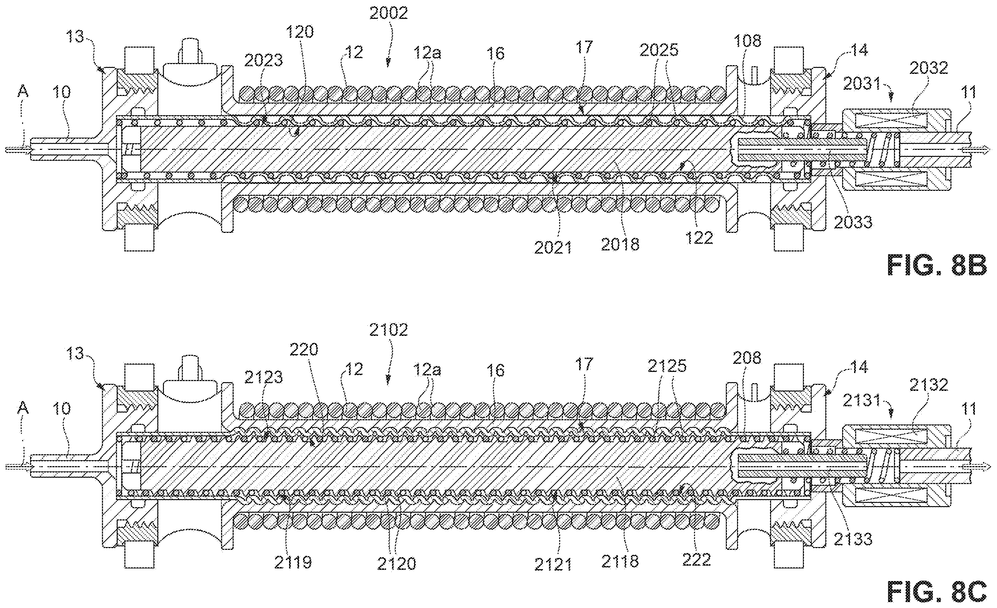

In figure 8b number 2002 indicates, as a whole, an electromagnetic induction milk heater according to a further embodiment of the invention.

Since the heater 2002 is similar to the heater 402, the following description is limited to the differences between them, using, when possible, the same references for identical or corresponding parts.

In particular, the heater 2002 differs from the heater 402 in that it comprises an insert 2018, which is structurally and functionally similar to the insert 118, but is movable inside the tubular body 108 by means of a magnetic actuator 2031, which is substantially identical, in terms of structure and function, to the magnetic actuator 1531.

Thanks to this configuration, the insert 2018 is movable inside the tubular body 108, without any substantial help from the pressure of the fluid exerted upon the insert 2018.

The operation of the heater 2002 is similar to the one of the heater 1502.

In figure 8c number 2102 indicates, as a whole, an electromagnetic induction milk heater according to a further embodiment of the invention.

Since the heater 2102 is similar to the heater 502, the following description is limited to the differences between them, using, when possible, the same references for identical or corresponding parts.

In particular, the heater 2102 differs from the heater 502 in that it comprises an insert 2118, which is structurally and functionally similar to the insert 18, but is movable inside the tubular body 208 by means of a magnetic actuator 2131, which is substantially identical, in terms of structure and function, to the magnetic actuator 1531.

Thanks to this configuration, the insert 2118 is movable inside the tubular body 208, without any substantial help from the pressure of the fluid exerted upon the insert 2118.

The operation of the heater 2102 is similar to the one of the heater 1502.

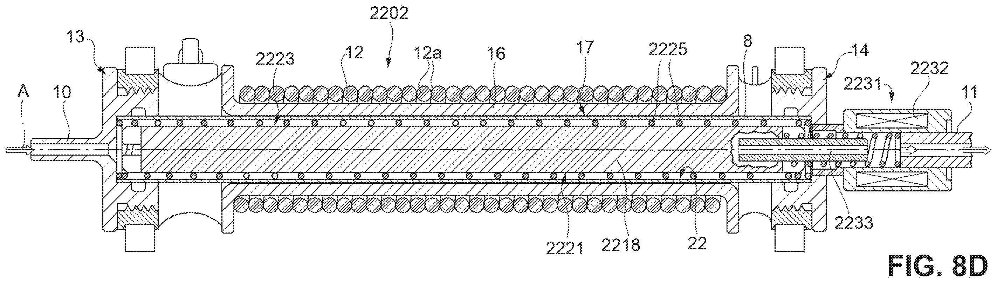

In figure 8d number 2202 indicates, as a whole, an electromagnetic induction milk heater according to a further embodiment of the invention.

Since the heater 2202 is similar to the heater 602, the following description is limited to the differences between them, using, when possible, the same references for identical or corresponding parts.

In particular, the heater 2202 differs from the heater 602 in that it comprises an insert 2218, which is structurally and functionally similar to the insert 118, but is movable inside the tubular body 8 by means of a magnetic actuator 2231, which is substantially identical, in terms of structure and function, to the magnetic actuator 1531.

Thanks to this configuration, the insert 2218 is movable inside the tubular body 8, without any substantial help from the pressure of the fluid exerted upon the insert 2218.

The operation of the heater 2202 is similar to the one of the heater 1502.

An analysis of the features of the heater 2, 102, 302, 403, 502, 602, 702, 802, 902, 1002, 1102, 1202, 1302, 1402, 1502, 1602, 1702, 1802, 1902, 2002, 2102, 2202 according to the invention allows readers to easily understand the advantages that can be obtained with it.

In particular, thanks to the helical shape of the flow channel 23, 123, 223, 323, 423, 523, 623, 723, 823, 923, 1023, 1123, 1223, 1323, 1423, 1523, 1623, 1723, 1823, 1923, 2023, 2123, 2223, the milk follows a definitely longer path inside the tubular body 8 compared to the case in which the milk flow axially flows in a linear manner. This allows the milk temperature to be controlled in a precise fashion. This solution proves to be particularly suited in case there are small flow rates and a high temperature precision is requested, for example for beverages whose taste is affected by the milk temperature.

In addition, the Applicant noticed that the heating of liquid milk carried out by means of the electromagnetic induction continuous-flow water heater of the type described above takes place without burning the fat contained therein, thus keeping the organoleptic properties of the milk unchanged.

Furthermore, in case there is a diverter member 325, 425, 525, 625, 725, 825, 925, 1025, 1125, 1225, 1325, 1425, 1525, 1625, 1725, 1825, 1925, 2025, 2125, 2225 inside the flow channel 323, 423, 523, 623, 723, 823, 923, 1023, 1123, 1223, 1323, 1423, 1523, 1623, 1723, 1823, 1923, 2023, 2123, 2223, the passage section of the flow channel can be changed by simply replacing the diverter member - for example by choosing diverter members whose turns have different diameters - without necessarily changing or replacing the insert or the tubular body.

Moreover, since the diverter member is elastically deformable and is arranged in contact with the internal surface of the tubular body, the axial movement of the turns of the diverter member during the elastic deformation causes the scraping and, hence, the removal of possible milk deposited on said internal surface, during the mounting phase.

Especially advantageous is the case in which said axial movement of the diverter member 1123, 1223, 1323, 1423, 1523, 1623, 1723, 1823, 1923, 2023, 2123, 2223 is controlled in an automatic manner, for example by means of the pressure exerted by the milk upon the insert 1118, 1218, 1318, 1418 or by means of the activation of an electromagnetic actuator moving the insert 1918, 2018, 2118, 2218 or, in addition, by means of both solutions mentioned above, as far as the insert 1518, 1618, 1718, 1818 is concerned.

Furthermore, in case the insert 718 defines a flow channel 723, 823, 923, 1023 having a variable passage section along the axis A, greater flow rates can be obtained compared to the case in which a flow channel is used, which has a constant passage section along the axis A.

Clearly, the heater 2, 102, 302, 403, 502, 602, 702, 802, 902, 1002, 1102, 1202, 1302, 1402, 1502, 1602, 1702, 1802, 1902, 2002, 2102, 2202 described and shown herein can be subjected to changes and variants, as long as this does not go beyond the scope of protection set forth in the appended claim.

## Claims

1. Use of an electromagnetic induction continuous-flow heater (2, 102, 302, 403, 502, 602, 702, 802, 902, 1002, 1102, 1202, 1302, 1402, 1502, 1602, 1702, 1802, 1902, 2002, 2102, 2202) comprising:
- a tubular body (8, 108, 208) having a longitudinal axis (A) and including at least one inlet (10), configured to receive milk to be heated and to feed it, in use, into the tubular body (8, 108, 208), and an outlet (11), through which the heated milk flows out of the tubular body (8, 108, 208),
- an electrical winding (12) wound around the tubular body (8, 108, 208) and electrically powerable to generate an electromagnetic induction field, the tubular body (8, 108, 208) being made of an electrically conductive material so that it is heated by electromagnetic induction due to the effect of said electromagnetic induction field,
- an insert (18, 118, 718, 1118, 1218, 1318, 1418, 1518, 1618, 1718, 1818, 1918, 2018, 2118, 2218) housed inside the tubular body (8, 108, 208) and extending along the longitudinal axis (A),
- a helical flow channel (23, 123, 223, 323, 423, 523, 623, 723, 823, 923, 1023, 1123, 1223, 1323, 1423, 1523, 1623, 1723, 1823, 1923, 2023, 2123, 2223) for the milk, which extends helically around the longitudinal axis (A) and is delimited by the internal surface (22, 122, 222) of the tubular body (8, 108, 208) and by the external surface (21, 121, 721, 1121, 1221, 1321, 1421, 1521, 1621, 1721, 1821, 1921, 2021, 2121, 2221) of the insert,
to heat milk in a machine (1) for the production of hot beverages.

## Patentansprüche

1. Verwendung eines elektromagnetischen Induktions-Durchlauferhitzers (2, 102, 302, 403, 502, 602, 702, 802, 902, 1002, 1102, 1202, 1302, 1402, 1502, 1602, 1702, 1802, 1902, 2002, 2102, 2202), umfassend:
- einen rohrförmigen Körper (8, 108, 208) mit einer Längsachse (A), der mindestens einen Einlass (10), der so ausgebildet ist, dass er zu erwärmende Milch aufnimmt und diese im Betrieb in den rohrförmigen Körper (8, 108, 208) einleitet, sowie einen Auslass (11) einschließt, durch den die erwärmte Milch aus dem rohrförmigen Körper (8, 108, 208) strömt,
- eine elektrische Wicklung (12), die um den rohrförmigen Körper (8, 108, 208) gewickelt ist und elektrisch mit Strom versorgt werden kann, um ein elektromagnetisches Induktionsfeld zu erzeugen, wobei der rohrförmige Körper (8, 108, 208) aus einem elektrisch leitfähigen Material besteht, sodass er durch elektromagnetische Induktion aufgrund der Wirkung des elektromagnetischen Induktionsfeldes erwärmt wird.
- einen Einsatz (18, 118, 718, 1118, 1218, 1318, 1418, 1518, 1618, 1718, 1818, 1918, 2018, 2118, 2218), der im Inneren des rohrförmigen Körpers (8, 108, 208) untergebracht ist und sich entlang der Längsachse (A) erstreckt,
- einen spiralförmigen Strömungskanal (23, 123, 223, 323, 423, 523, 623, 723, 823, 923, 1023, 1123, 1223, 1323, 1423, 1523, 1623, 1723, 1823, 1923, 2023, 2123, 2223) für die Milch, der sich spiralförmig um die Längsachse (A) erstreckt und durch die Innenfläche (22, 122, 222) des rohrförmigen Körpers (8, 108, 208) sowie durch die Außenfläche (21, 121, 721, 1121, 1221, 1321, 1421, 1521, 1621, 1721, 1821, 1921, 2021, 2121, 2221) des Einsatzes begrenzt wird,
um Milch in einer Maschine (1) zur Herstellung heißer Getränke zu erhitzen.

## Revendications

1. Utilisation d'un réchauffeur (2, 102, 302, 403, 502, 602, 702, 802, 902, 1002, 1102, 1202, 1302, 1402, 1502, 1602, 1702, 1802, 1902, 2002, 2102, 2202) à écoulement continu à induction électromagnétique comprenant :
- un corps tubulaire (8, 108, 208) présentant un axe longitudinal (A) et comportant au moins une entrée (10), configurée pour recevoir du lait à chauffer et pour l'acheminer, lors de l'utilisation, dans le corps tubulaire (8, 108, 208), et une sortie (11), à travers laquelle le lait chauffé s'écoule hors du corps tubulaire (8, 108, 208),
- un enroulement électrique (12) enroulé autour du corps tubulaire (8, 108, 208) et pouvant être alimenté électriquement pour générer un champ d'induction électromagnétique, le corps tubulaire (8, 108, 208) étant constitué d'un matériau électriquement conducteur de sorte qu'il soit chauffé par induction électromagnétique sous l'effet dudit champ d'induction électromagnétique.
- un insert (18, 118, 718, 1118, 1218, 1318, 1418, 1518, 1618, 1718, 1818, 1918, 2018, 2118, 2218) logé à l'intérieur du corps tubulaire (8, 108, 208) et s'étendant le long de l'axe longitudinal (A),
- un canal d'écoulement hélicoïdal (23, 123, 223, 323, 423, 523, 623, 723, 823, 923, 1023, 1123, 1223, 1323, 1423, 1523, 1623, 1723, 1823, 1923, 2023, 2123, 2223) pour le lait, qui s'étend de manière hélicoïdale autour de l'axe longitudinal (A) et est délimité par la surface interne (22, 122, 222) du corps tubulaire (8, 108, 208) et par la surface externe (21, 121, 721, 1121, 1221, 1321, 1421, 1521, 1621, 1721, 1821, 1921, 2021, 2121, 2221) de l'insert, pour chauffer du lait dans une machine (1) destinée à la préparation de boissons chaudes.
